# EUROPÄISCHE PATENTSCHRIFT

(11) **EP 3 032 058 B1**
(45) Veröffentlichungstag und Bekanntmachung des Hinweises auf die Patenterteilung: **09.05.2018**
(21) Anmeldenummer: 14197431.1
(22) Anmeldetag: 11.12.2014
(51) Int. Cl.: F01N 3/20, F16L 53/00

(54) **Leitung für eine wässrige Lösung sowie deren Herstellung**
Conduit for an aqueous solution and its production
Conduite pour une solution aqueuse et sa fabrication

(43) Veröffentlichungstag der Anmeldung: 15.06.2016
(73) Patentinhaber: TI Automotive (Fuldabrück) GmbH, 34277 Fuldabrück (DE)
(72) Erfinder: Hersel, Walter, 71229 Leonberg (DE)
(74) Vertreter: Rohmann, Michael

(56) Entgegenhaltungen:
- EP-A1- 2 666 985
- WO-A1-2004/018924
- WO-A1-2009/063980
- DE-A1-102009 022 995
- DE-A1-102010 032 188
- DE-A1-102011 018 243
- DE-U1-202009 010 595

## Beschreibung

Die Erfindung betrifft eine Leitung für ein flüssiges Medium, insbesondere für eine wässrige Lösung insbesondere in Kraftfahrzeugen. Bevorzugt handelt es sich bei dem flüssigen Medium um eine wässrige Harnstofflösung, welche beispielsweise unter dem Namen "AdBlue", kommerziell vertrieben wird und der selektiven katalytischen Reduktion (engl.: selective catalytic reduction, SCR) dient. Die Erfindung betrifft auch ein Verfahren zur Herstellung der genannten Leitung.

Die eingangs genannte Leitung ist aus der Praxis grundsätzlich bekannt. Sie überwindet das Problem des Gefrierens von AdBlue bei -11°C während des Kraftfahrzeugbetriebs, indem durch an den Leitungen angeordnete Heizelemente das Medium flüssig halten. Allerdings besteht weiterhin das Problem, dass die in der Praxis bekannten Leitungen bei Stillstand des Kraftfahrzeugs zufrieren. Das Eis von AdBlue ist in seinem Volumen gegenüber der flüssigen Phase um bis zu 11% vergrößert. Aus der Praxis ist es daher auch bekannt, diese Volumenänderung mittels einer nachgiebigen Schicht auszugleichen. Diese nachgiebige Schicht ist um ein elastisches und medienverträgliches Innenrohr angeordnet und nachgiebig in dem Sinne, dass sich bei Gefrieren lediglich der Innendurchmesser vergrößert, nicht aber der Außendurchmesser. Bei Gefrieren von AdBlue wird somit das Volumen dieser Schicht verringert. Folglich sind die nachfolgenden äußeren Schichten nicht von der Volumenänderung des Mediums bei Gefrieren betroffen.

Nachteilig an dieser aus der Praxis bekannten Lösung ist jedoch, dass das Heizelement die nachgiebige Schicht ummantelt. Dies bedingt größere Heizleistungen, um ausreichend Wärme von dem Heizelement durch die nachgiebige Schicht und durch das Innenrohr bis zum Medium zu transportieren. Aus diesem Grunde ist stets ein gewisser Anteil von Kammern der nachgiebigen Schicht aus der in der Praxis bekannten Lösung mit einem Wärmeleitmittel gefüllt. Der nachteilige Effekt der erhöhten Heizleistung bzw. der längeren Auftauzeit bei gleichbleibender Heizleistung wird dadurch aber leidglich um einen Bruchteil kompensiert. Diese Nachteile werden jedoch in der aus der Praxis bekannten Lösung aus Stabilitätsgründen in Kauf genommen. Denn Heizelemente sind grundsätzlich aufgrund von in der Regel sehr dünnen Heizdrähten äußerst empfindlich bei sich vergrößernden Medienvolumina, was bis zur Zerstörung des Heizelementes führen kann. Noch beeinträchtigender für die Funktionsweise der gesamten Leitung wäre zudem die Kerbwirkung, welche von dem Heizelement auf das Innenrohr ausgeübt würde. Denn die zumeist in Form von gewickelten Heizdrähten verwendeten Heizwiderstände schnürten das elastische Innenrohr an vielen Stellen ein, wodurch bei einer Vielzahl von Volumenänderungen mit der Zeit Kerben auf der Außenhaut des Innenrohres entstünden. Diese Kerben könnten über Jahre hinweg zu Rissen in dem Innenrohr und damit zur Zerstörung der Leitung führen.

Die aus der Praxis bekannte Leitung findet ihre Entsprechung in der EP 2 666 985 A1 oder in der WO 2009/963980 A1. In beiden Fällen ist ein medienverträgliches Innenrohr umschrieben, welches jeweils von zwei Heizdrähten doppelhelixförmig umschlossen wird. Die beiden Heizdrähte wiederum werden jeweils von einer Druckausgleichsschicht umschlossen, wobei die Druckausgleichsschicht in beiden Fällen nachgiebiger als das Innenrohr und eine die Druckausgleichsschicht umgebende Festigkeitsschicht ist. Im ersten Falle handelt es sich bei der Druckausgleichsschicht um eine Luftschicht, wohingegen es sich beim zweiten Falle um ein Gewebe handelt. In beiden Fällen treten die Nachteile auf, wie sie bereits vorstehend beschrieben wurden.

Der Erfindung liegt daher das technische Problem zugrunde, eine Leitung der eingangs genannten Art anzugeben, bei der die vorstehend beschriebenen Nachteile vermieden werden bzw. wenigstens verringert werden. Insbesondere liegt der Erfindung das technische Problem zugrunde, eine Leitung der eingangs genannten Art anzugeben, bei der die aufzuwendende Heizleistung verringert ist bzw. bei der eine kürzere Auftauzeit bei gleichbleibender Heizleistung erreicht wird. Weiter liegt der Erfindung insbesondere das technische Problem zugrunde, eine Leitung der eingangs genannten Art anzugeben, bei welcher die aufzuwendende Heizleistung verringert ist und gleichzeitig das Heizelement weder selber beeinträchtigt wird noch das Innenrohr beeinträchtigt. Weiterhin liegt der Erfindung das technische Problem zugrunde, eine Leitung der eingangs genannten Art anzugeben, welche auf wirtschaftliche Art und Weise hergestellt werden kann.

Zur Lösung dieses technischen Problems lehrt die Erfindung eine Leitung für ein flüssiges Medium, insbesondere für eine wässrige Lösung insbesondere in Kraftfahrzeugen, umfassend ein medienverträgliches Innenrohr, wenigstens ein Heizelement, eine das Heizelement umschließende Druckausgleichsschicht und eine die Druckausgleichsschicht umschließende Festigkeitsschicht, wobei die Druckausgleichsschicht nachgiebiger als das Innenrohr und die Festigkeitsschicht ist, wobei das Heizelement das Innenrohr nur zu einem Teil umschließt, wobei die Druckausgleichsschicht einen porösen Kunststoff umfasst.

Der Begriff "medienverträglich" meint, dass das flüssige Medium das Innenrohr nicht derart beeinträchtigt, dass eine Beeinträchtigung der äußeren Schichten zu befürchten ist. Insbesondere ist mit diesem Begriff gemeint, dass das Innenrohr für wässrige Harnstofflösungen und bevorzugt für AdBlue ausgelegt ist.

Der Ausdruck "nachgiebig" meint, dass das Volumen des jeweiligen Materials sich aufgrund der Vereisung verringert und bei Abnahme des Drucks durch Vereisung wieder zunimmt. Der Komparativ dieses Begriffs meint dementsprechend, dass eine Schicht eine stärkere Änderung des Volumens als eine andere Schicht erfährt.

Der Ausdruck "nachgiebig" ist insbesondere nicht zu verwechseln mit dem Begriff "elastisch", welcher im Sinne der Erfindung lediglich meint, dass die Schichten neben einer Vergrößerung des Innendurchmessers bei Vereisung auch eine entsprechende Vergrößerung des Außendurchmessers erfahren. Elastische Schichten passen sich aufgrund des Innendrucks somit ebenfalls an, jedoch bleibt das Volumen dieser Schichten im Wesentlichen oder weitgehend konstant. Insbesondere das Innenrohr ist elastisch.

Vorzugsweise sind das Innenrohr, die Druckausgleichsschicht und/oder die Festigkeitsschicht aus Kunststoff. Das Heizelement ist gemäß einer ersten Ausführungsform drahtförmig und gemäß einer zweiten Ausführungsform flächig ausgebildet. Gemäß anderen Ausführungsformen ist das Heizelement eine Kombination aus wenigstens einem drahtförmigen Element und wenigstens einem flächigen Element. Unter den Begriff "Heizelement" fallen sämtliche Elemente, deren Zweck ausschließlich auf das Heizen ausgerichtet ist. Hierunter fallen beispielsweise Klebebänder, welche das Heizelement an der Leitung befestigen. Dies gilt im Gegensatz hierzu z.B. nicht für die Druckausgleichsschicht, welche das erfindungsgemäße Heizelement zwar ebenfalls befestigt, jedoch auch anderen Zwecken als dem Heizen dient. Hier ist zunächst der Druckausgleich zu erwähnen.

Es liegt im Rahmen der Erfindung, dass die Druckausgleichsschicht elektrisch und/oder thermisch isolierend ist.. Zweckmäßigerweise sind die Poren des porösen Kunststoffes mit Gas und vorzugsweise mit Luft gefüllt. Besonders vorzugsweise sind sämtliche oder nahezu sämtliche Poren des porösen Kunststoffes mit Gas bzw. mit Luft gefüllt. Dieser Maßnahme liegt die Erkenntnis zugrunde, dass die Gas- bzw. Luftmenge in der Druckausgleichsschicht räumlich in der Druckausgleichsschicht gebunden ist und nicht zirkulieren kann. Dadurch wird eine besonders gute Wärmeisolierung erreicht. Vorteilhaft ist auch die gute elektrische Isolierung durch den porösen Kunststoff. Besonders aber erlauben die mit Gas bzw. Luft gefüllten Poren eine hohe Nachgiebigkeit. Bevorzugt enthält der poröse Kunststoff Polyurethan oder Ethylen-Propylen-Dien-Kautschuk (EPDM). Weiter bevorzugt enthält die Druckausgleichsschicht aufgeschäumtes Polyurethan bzw. EPDM. Vorteilhaft ist, dass Polyurethan bzw. EPDM gut extrudiert werden können und robust bzw. sehr robust (EPDM) sind.

Gemäß einer Ausführungsform der Erfindung ist die Stärke der Druckausgleichsschicht größer als die größte radiale Ausdehnung des Heizelementes. Die Druckausgleichsschicht weist vorzugsweise eine Stärke von 0,5 bis 3,0 mm, weiter vorzugsweise von 0,8 bis 2,5 mm und besonders vorzugsweise von 1,0 bis 2,0 mm auf. Die Stärke der Druckausgleichsschicht ist bevorzugt 1,2- bis 4-fach, weiter bevorzugt 1,5- bis 3-fach und besonders bevorzugt 1,7- bis 2,5-fach dicker als die größte radiale Ausdehnung des Heizelementes. Diesen Werten liegt die Erfahrung zugrunde, dass das Heizelement stellenweise Material der Druckausgleichsschicht verdrängt und so stellenweise größere Kräfte auf die Festigkeitsschicht bzw. auf das Heizelement wirken. Bei einer hinreichend großen Stärke der Druckausgleichssicht sind die auf die Festigkeitsschicht und vor allem auf das Heizelement wirkenden Kräfte hinreichend gering.

Es liegt im Rahmen der Erfindung, dass das Innenrohr eine Schichtdicke von 0,2 bis 2,0 mm, vorzugsweise von 0,3 bis 1,4 mm und besonders vorzugsweise von 0,5 bis 0,8 mm aufweist. Es ist vorteilhaft, dass das Innenrohr Polyamid umfasst. Weiter vorteilhafterweise umfasst das Innenrohr Polyamid 11 oder Polyamid 12. Diesen Maßnahmen liegt die Erkenntnis zugrunde, dass das Innenrohr besonders dünn ausgebildet sein sollte, um eine größtmögliche Wärmeübertragung auf das flüssige Medium zu gewährleisten. Auf der anderen Seite muss das Innenrohr eine gewisse Schichtdicke aufweisen, um ausreichend stabil und medienverträglich zu sein.

Gemäß einer bevorzugten Ausführungsform beträgt die Schichtdicke der Festigkeitsschicht 0,4 bis 5,0 mm, vorzugsweise 0,7 bis 3,0 mm und besonders vorzugsweise 1,0 bis 2,0 mm. Zweckmäßigerweise enthält die Festigkeitsschicht Polyamid und vorzugsweise Polyamid 6 oder Polyamid 6.6. Hieran ist vorteilhaft, dass die Festigkeitsschicht einerseits einen ausreichenden Schutz für die darunterliegende Druckausgleichsschicht bietet und andererseits noch gute Biegeeigenschaften aufweist.

Es liegt im Rahmen der Erfindung, dass der an der Festigkeitsschicht gemessene Außendurchmesser 5 bis 15 mm, vorzugsweise 7 bis 12 mm und besonders vorzugsweise 8 bis 11 mm beträgt. Die Messung wird bei Raumtemperatur und bei Füllung der Leitung mit Luft vorgenommen. Diesen Werten liegt die Erfahrung zugrunde, dass die Leitung hierdurch besonders vorteilhafte Biegeeigenschaften aufweist.

Vorteilhafterweise liegt das Heizelement an dem Innenrohr an. Weiter vorteilhafterweise liegt das Heizelement durchgehend an dem Innenrohr an. Insbesondere ist kein Kleber zwischen Heizelement und Innenrohr angeordnet. Hierdurch wird eine gute Wärmeübertragung auf das flüssige Medium erreicht..

Vorteilhafterweise ist das Heizelement spiralförmig um das Innenrohr gewickelt, wobei Teile der Oberfläche des Innenrohres frei bleiben. Vorzugsweise bleiben 10 bis 90%, weiter vorzugsweise 20 bis 80% und besonders vorzugsweise 30 bis 70% der Oberfläche des Innenrohres von einer Bedeckung des Heizelementes frei. Hiermit wird bezweckt, dass die Kerbwirkung des Heizelementes auf das Innenrohr verringert wird.

Bevorzugt ist das Heizelement gleitend auf dem Innenrohr gelagert. Insbesondere ist das Heizelement gleitend und anliegend auf dem Innenrohr gelagert. Vorteilhafterweise umfasst das Heizelement ein flächiges Element. Weiter vorteilhafterweise umfasst das Heizelement eine Folie und besonders bevorzugt eine Gleitfolie. Zweckmäßigerweise liegt das flächige Element des Heizelementes an dem Innenrohr an. Diese Maßnahmen bewirken eine Verringerung der Kerbwirkung.

Es liegt im Rahmen der Erfindung, dass das Heizelement eine Vielzahl von Heizwiderständen in Parallelschaltung umfasst. Bevorzugt weist das Heizelement zwei Versorgungsleiter entlang der Leitung auf. Es ist zweckmäßig, dass die Versorgungsleiter im planen Zustand des Heizelementes zueinander parallel bzw. im Wesentlichen parallel sind. Im umwickelten Zustand bilden die Versorgungsleiter zweckmäßigerweise eine Doppelhelix. Es ist zweckmäßig, dass zwischen den Versorgungsleitern die Vielzahl von Heizwiderständen angeordnet ist. Zweckmäßigerweise sind die Heizwiderstände kürzer und vorzugsweise deutlich kürzer als die Leitung. Die Länge der Heizwiderstände beträgt bevorzugt 1 bis 50 mm, weiter bevorzugt 2 bis 25 mm und besonders bevorzugt 3 bis 15 mm. Vorteilhafterweise ist die Vielzahl der Heizwiderstände derart an der Leitung angeordnet, dass die Anzahl der Heizwiderstände je Längenabschnitt der Leitung entlang der Leitung konstant bzw. im Wesentlichen konstant ist. Diesen Maßnahmen liegt die Erkenntnis zugrunde, dass die Heizleistung des Heizelementes längenunabhängig ist, wenn an den Versorgungsleitern stets das gleiche Potential anliegt. Wird beispielsweise das Heizelement in der Hälfte durchgeschnitten, so werden die einzelnen Heizwiderstände nach wie vor von der gleichen Stromstärke durchflossen und wärmen sich unverändert auf. In der Folge kann die Produktion der Leitung längenunabhängig geschehen, weshalb die Produktion sich flexibler und damit auch wirtschaftlicher gestaltet. Bevorzugt beträgt die längenbezogene Heizleistung des Heizelementes 4 bis 10 W/m, weiter bevorzugt 6 bis 16 W/m und ganz bevorzugt 8 bis 12 W/m.

Gemäß einer besonders bevorzugten Ausführungsform weist das Heizelement wenigstens einen alternierenden Heizdraht auf. Der Begriff "alternierend" meint, dass der Heizdraht zwischen Scheitelpunkten hin- und herverläuft. Hierunter fallen beispielsweise Schlangenlinien, Zickzacklinien oder Kombinationen hieraus. Ferner ist auch eine Schleifenlinie zu nennen, bei welcher die einzelnen Schleifen nacheinander ineinander übergehen und sich schließlich entlang des gesamten Heizelementes ziehen. Vorzugsweise weist das Heizelement lediglich einen Heizdraht auf. Bevorzugt erstreckt sich der wenigstens eine Heizdraht entlang des ganzen Heizelementes und besonders bevorzugt entlang der ganzen Leitung. Diese Maßnahmen bewirken zweierlei. Zunächst bildet sich entlang des wenigstens einen Heizdrahtes ein Flüssigkeitskanal aus, weswegen es sehr schnell zu einer Strömung des flüssigen Mediums kommt. Hierdurch wird eine deutlich schnellere Auftauleistung erzielt. Außerdem werden durch den alternierenden Verlauf des Heizdrahtes die Scheitelpunkte gebildet, welche Kontaktierungen mit den Versorgungsleitern erlauben.

Vorzugsweise ist die Schmelztemperatur des Materials des wenigstens einen alternierenden Heizdrahtes größer als die Schmelztemperatur des Materials der Versorgungsleiter. Dieser Maßnahme liegt die Erkenntnis zugrunde, dass die Scheitelpunkte des alternierenden Heizdrahtes bei Anlegung eines ausreichend hohen Stromes sich derart erhitzen, dass die Versorgungsleiter an Kontaktpunkten mit dem Heizdraht verschweißt werden. Hierdurch wird eine sehr wirtschaftliche Herstellung des Heizelementes gewährleistet.

Es liegt im Rahmen der Erfindung, dass die Festigkeitsschicht von einer Isolationsschicht umschlossen wird. Es ist weiter bevorzugt, dass die Isolationsschicht von einer äußeren Schutzschicht umgeben ist. Die Isolationsschicht umfasst vorzugsweise schaumstoffförmigen Kunststoff. Die Schutzschicht enthält bevorzugt Polyamid und weist eine Stärke von 0,5 bis 3,0 mm, vorzugsweise von 0,7 bis 2,5 mm und besonders vorzugsweise von 1,0 bis 2,0 mm auf. Diese Maßnahmen bedingen, dass die Leitung besser isoliert bzw. stabiler ausgebildet ist.

Zur Lösung des technischen Problems lehrt die Erfindung auch ein Verfahren zur Herstellung einer Leitung, insbesondere einer oben beschriebenen erfindungsgemäßen Leitung, wobei ein medienverträgliches Innenrohr bereitgestellt wird, wobei ein Heizelement derart an der Leitung angeordnet wird, dass das Heizelement das Innenrohr wenigstens teilweise umschließt, wobei eine Druckausgleichsschicht um das Innenrohr bzw. das Heizelement herum angeordnet wird, wobei eine Festigkeitsschicht um die Druckausgleichsschicht herum angeordnet wird.

Vorzugsweise wird wenigstens eine Schicht und weiter vorzugsweise werden wenigstens zwei der Schichten und ganz besonders vorzugsweise werden alle Schichten aus der Gruppe "Innenrohr, Druckausgleichsschicht, Festigkeitsschicht" extrudiert. Es ist bevorzugt, dass eine Isolationsschicht und/oder eine Schutzschicht extrudiert werden. Auf diese Art und Weise kann die Leitung besonders wirtschaftlich hergestellt werden. Insbesondere erlaubt die Extrusion eine längenunabhängige Produktion der Leitung.

Es liegt im Rahmen der Erfindung, dass das Heizelement wenigstens zwei Versorgungsleiter und wenigstens einen Heizdraht aufweist, wobei eine Anwendungsvorrichtung den Heizdraht zu den Versorgungsleitern positioniert und den Heizdraht mit den Versorgungsleitern verbindet. Zweckmäßigerweise werden die Versorgungsleiter in einer Verfahrrichtung verfahren. Vorteilhafterweise geschehen Positionierung und Verbindung gleichzeitig. Die Verbindung ist zweckmäßigerweise stoffschlüssig und idealerweise eine Lötverbindung. Es liegt im Rahmen der Erfindung, dass die Anordnungsvorrichtung eine Heizdrahtrolle ist. Es ist bevorzugt, dass der Heizdraht quer zur Verfahrrichtung alternierend auf der Heizdrahtrolle aufgewickelt wird. Bevorzugt wird der Heizdraht an Haltedornen der Heizdrahtrolle aufgewickelt. Es ist zweckmäßig, dass die Haltedorne an den Enden der Heizdrahtrolle angeordnet sind. Vorteilhafterweise sind die Haltedorne der jeweiligen Enden zueinander versetzt. Zweckmäßigerweise wird der Heizdraht von der Heizdrahtrolle auf die Versorgungsleiter abgewickelt. Es ist im Rahmen der Erfindung, dass ein Strom von der Anordnungsvorrichtung über den Heizdraht und durch den jeweiligen Versorgungsleiter fließt. Zweckmäßigerweise verursacht der Stromfluss ein Aufschmelzen des Heizdrahtes und/oder des jeweiligen Versorgungsleiters. Gemäß einer bevorzugten Ausführungsform liegt der Heizdrahtrolle eine erste Gegenrolle gegenüber. Es ist zweckmäßig, dass die Heizdrahtrolle und die erste Gegenrolle den Heizdraht und die Versorgungsleiter gegeneinander drücken. Idealerweise fließt der Strom über die Heizdrahtrolle, den Heizdraht, den jeweiligen Versorgungsleiter und die Gegenrolle. Es liegt im Rahmen der Erfindung, dass die Gegenrolle je eine Nut zur Aufnahme der Versorgungsleiter aufweist.

Vorzugsweise ist die Schmelztemperatur des Materials des Heizdrahtes größer als die Schmelztemperatur des Materials der Versorgungsleiter. Es ist bevorzugt, dass der Heizdraht durchgehend ist und sich vorteilhafterweise über die ganze Länge des Heizelementes erstreckt. Es liegt insbesondere im Rahmen der Erfindung, dass Scheitelpunkte des alternierenden Heizdrahtes die Kontaktpunkte bilden, an welchen Scheitelpunkten der Heizdraht die Versorgungsleiter berührt. "Scheitelpunkt" muss nicht zwingend der Bereich des Heizdrahtes sein, welcher in axialer Richtung gesehen außerhalb der Haltedorne liegt. Vielmehr können dies auch Bereiche des Heizdrahtes sein, welche axial innerhalb und in der Nähe der Haltedorne liegen. Diese Maßnahmen bewirken, dass das Heizelement mit einer Vielzahl von parallel zueinander geschalteten Heizwiderständen sehr wirtschaftlich hergestellt werden kann. Ferner wird dadurch eine gute Stabilität des Heizelementes erreicht. Schließlich bleibt das Heizelement funktionsfähig, selbst wenn ein Heizwiderstand oder mehrere Heizwiderstände reißen und damit funktionsunfähig werden. Die Parallelschaltung bedingt somit auch eine Redundanz hinsichtlich der einzelnen Heizwiderstände.

Es ist vorteilhaft, dass auf den Heizdraht eine Folie aufgeklebt wird. Zweckmäßigerweise liegt die Folie an dem Innenrohr an. Vorzugsweise ist die Folie wenigstens bereichsweise mit einer Klebeschicht zur Haftung auf dem Heizdraht bzw. den Versorgungsleitern versehen. Durch diese Maßnahmen erhält das Heizelement einen flächigen Charakter und kann gleitend auf dem Innenrohr gelagert werden. Vorzugsweise ist das flächige Element eine Folie und besonders vorzugsweise eine Gleitfolie. Hierdurch wird insbesondere die Kerbwirkung vermieden bzw. wenigstens verringert. Weiterhin bietet das flächige Element den Vorteil eines weiteren Stabilitätszugewinns des Heizelementes, was insbesondere für die Anordnung um das Innenrohr herum wichtig ist. Die Folie wird vorzugsweise mit einer Folienrolle auf den Heizdraht bzw. auf die Versorgungsleiter aufgebracht. Zweckmäßigerweise liegt der Folienrolle eine zweite Gegenfolienrolle gegenüber.

Der Erfindung liegt die Erkenntnis zugrunde, dass mit dem erfindungsgemäßen Aufbau der Leitung die aufzuwendende Heizleistung gegenüber der aus der Praxis bekannten Lösung verringert werden kann. Insbesondere kann bei gleichbleibender Heizleistung eine kürzere Auftauzeit erreicht werden. Durch die oben dargestellten Maßnahmen kann insbesondere die Kerbwirkung des wenigstens einen Heizelementes um das Innenrohr herum vermieden oder wenigstens verringert werden. Zudem bedarf es erfindungsgemäß keiner Heizelemente, welche bereits vor Herstellung der Leitung von einer isolierenden Schutzhülle ummantelt sind. Die erfindungsgemäße Leitung bietet weiter den Vorteil, dass die Wärmeübertragung sich in besonders hohem Maße auf das Innenrohr bzw. das sich hierin befindliche flüssige Medium richtet. Der erfindungsgemäße Aufbau ermöglicht zudem sehr vorteilhafte Biegeeigenschaften der Leitung. Weiterhin zeichnet sich die erfindungsgemäße Leitung durch eine sehr gute Stabilität bzw. Schlagfestigkeit aus. Ein weiterer Vorteil besteht in der Längenunabhängigkeit bei der Herstellung des Heizelementes. Das Gleiche trifft auf die Kunststoffschichten zu, welche ausnahmslos extrudiert werden können. Auch hierdurch lassen sich sowohl das Heizelement als auch die Kunststoffschichten sehr wirtschaftlich herstellen. Ein weiterer Vorteil ist die Redundanz der einzelnen Heizwiderstände. Weiterhin zeichnet sich die Erfindung durch ein besonders schnelles Auftauverhalten aus.

Nachfolgend wird die Erfindung anhand einer lediglich ein Ausführungsbeispiel darstellenden Zeichnung näher erläutert. Es zeigen in schematischer Darstellung
- Fig. 1: einen Querschnitt einer erfindungsgemäßen Leitung,
- Fig. 2: eine perspektivische Ansicht eines erfindungsgemäßen Heizelementes aus Fig. 1,
- Fig. 3: einen Querschnitt des erfindungsgemäßen Heizelementes aus Fig. 2,
- Fig. 4: eine perspektivische Ansicht des erfindungsgemäßen Heizelementes aus Fig. 2 während der Herstellung,
- Fig. 5: einen Querschnitt des erfindungsgemäßen Heizelementes aus Fig. 4 während der Herstellung.

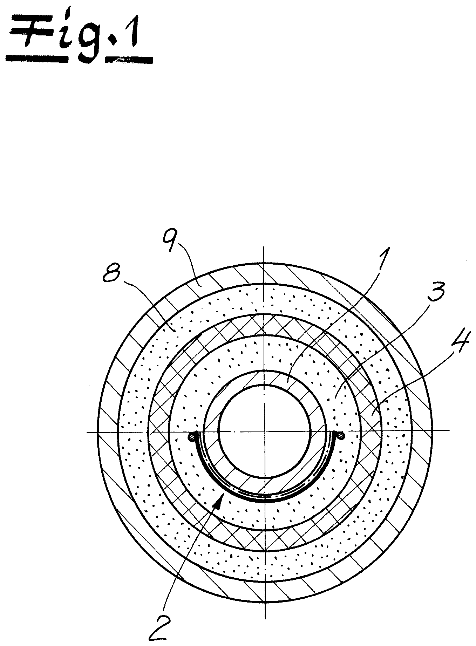

In Fig. 1 ist der Schichtaufbau der erfindungsgemäßen Leitung gut ersichtlich. Auf ein medienverträgliches Innenrohr 1 folgt ein Heizelement 2 bzw. eine Druckausgleichsschicht 3. Die Druckausgleichsschicht 3 wird umgeben von einer Festigkeitsschicht 4, welche wiederum gefolgt wird von einer Isolationsschicht 8, auf welcher eine Schutzschicht 9 angeordnet ist. Das Heizelement 2 liegt an dem Innenrohr 1 an und umschließt das Innenrohr 1 etwa zur Hälfte. Alle übrigen Schichten der Leitung sind konzentrisch aufgebaut.

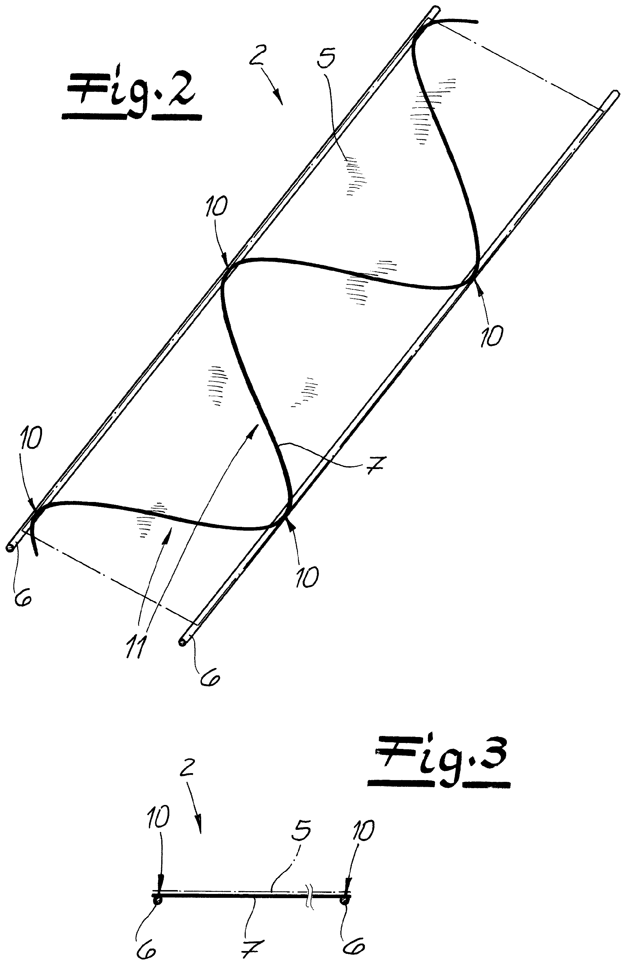

Die Fig. 2 und 3 verdeutlichen den Aufbau des Heizelementes 2. Zwei Versorgungsleiter 6 in Form von zwei dickeren Drähten sind parallel zueinander angeordnet, wobei der Abstand der beiden Versorgungsleiter 6 in dem Ausführungsbeispiel etwa der Hälfte des Außenumfangs des Innenrohres 1 entspricht. Zwischen den beiden Versorgungsleitern 6 befindet sich ein alternierender Heizdraht 7, welcher zwischen den Versorgungsleitern 6 schlangenlinien- bzw. sinusförmig verläuft. Dabei liegen die Scheitelpunkte des alternierenden Heizdrahtes 7 gerade an den Versorgungsleitern 6 an und bilden dort Kontaktpunkte 10. An den Kontaktpunkten 10 ist der Heizdraht 7 mit den Versorgungsleitern 6 verschweißt. An den Versorgungsleitern 6 liegt bei Betrieb des Heizelementes 2 eine Versorgungsspannung an, weswegen die einzelnen Verbindungsabschnitte des Heizdrahtes 7 zwischen den Versorgungsleitern 6 elektrisch parallel zueinander geschaltet sind. Damit liegt ein Heizelement 2 mit einer Vielzahl von parallel zueinander geschalteten Heizwiderständen 11 vor. Das Heizelement 2 ist somit bezüglich seiner Heizleistung längenunabhängig.

Wie Fig. 3 zu entnehmen ist, liegt der Heizdraht 7 dabei auf den Versorgungsleitern 6 auf. Auf dem Heizdraht 7 ist schließlich mittels Kleber eine Gleitfolie 5 angeordnet, welche die Fläche zwischen den Versorgungsleitern 6 überdeckt. In der vorliegenden Ausführungsform ist das Heizelement 2 derart um das Innenrohr 1 gewickelt, dass nur etwa 50% der Außenfläche des Innenrohres 1 von dem Heizelement 2 bedeckt wird. Insbesondere ist das Heizelement 2 nicht auf das Innenrohr 1 geklebt oder in sonstiger Weise an dem Innenrohr 1 befestigt. Dies ermöglicht eine gleitende Lagerung des Heizelementes 2 auf dem Innenrohr 1.

Das Innenrohr 1 weist eine Schichtdicke von 0,5 bis 0,8 mm auf und enthält Polyamid 11 oder Polyamid 12. Die Druckausgleichsschicht enthält aufgeschäumtes Polyurethan und damit einen porösen Kunststoff. In der Folge ist die Druckausgleichsschicht 3 elektrisch und thermisch isolierend. Die Druckausgleichsschicht 3 weist eine Stärke von 1,0 bis 2,0 mm auf. Die Schichtdicke der Festigkeitsschicht 4 beträgt 1,0 bis 2,0 mm. Die Festigkeitsschicht 4 umfasst Polyamid 6 oder Poyamid 6.6 und weist einen Außendurchmesser von 8 bis 11 mm auf. Die Isolationsschicht 8 enthält schaumstoffförmigen Kunststoff. Die Schutzschicht 9 umfasst Polyamid und hat eine Schichtdicke, die 1,0 bis 2,0 mm beträgt.

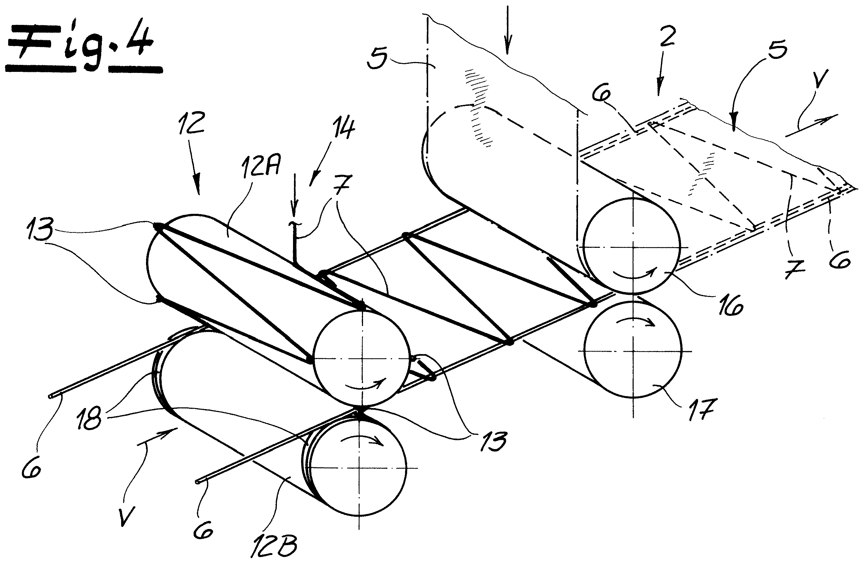

Die zuvor beschriebene Leitung wird erfindungsgemäß hergestellt, indem zunächst das Heizelement 2 vorbereitet wird. Hierzu werden gemäß Fig. 4 zunächst zwei Versorgungsleiter 6 von einer nicht dargestellten Rolle abgewickelt und in eine Verfahrrichtung V verfahren. Die Versorgungsleiter 6 passieren zunächst eine Anordnungsvorrichtung 12 aus einer Heizdrahtrolle 12A sowie einer ersten Gegenrolle 12B. Dabei übt die Heizdrahtrolle 12A von oben einen gewissen Druck auf die Versorgungsleiter 6 aus, wobei die erste Gegenrolle 12B für den Gegendruck von unten verantwortlich ist. Die erste Gegenrolle 12B weist an ihren Enden jeweils eine Nut 18 zur Führung des jeweiligen Versorgungsleiters 6 auf. Die Heizdrahtrolle 12A hingegen besitzt an ihren Enden eine Mehrzahl von Haltedornen 13. Die Haltedorne 13 sind in gleichmäßigen Winkelabständen an den jeweiligen Enden der Heizdrahtrolle 12A angeordnet. Dabei sind die Haltedorne 13 des ersten Endes versetzt zu denjenigen des zweiten Endes, so dass eine alternierende Aufwicklung des Heizdrahtes, wie in Fig. 4 gezeigt, möglich ist. Eine nur angedeutete Aufwicklungseinheit 14 verfährt hierzu den Heizdraht 7 oberhalb der Heizdrahtrolle 12A im Wechsel quer zur Verfahrrichtung V, wodurch der Heizdraht 7 von den Haltedornen 13 mitgenommen und auf diese Weise alternierend aufgewickelt wird. Aufgrund der alternierenden Aufwicklung kann der Heizdraht 7 mittels weiteren Umdrehens der Heizdrahtrolle 12A in alternierender Form zu den Versorgungsleitern 6 positioniert werden.

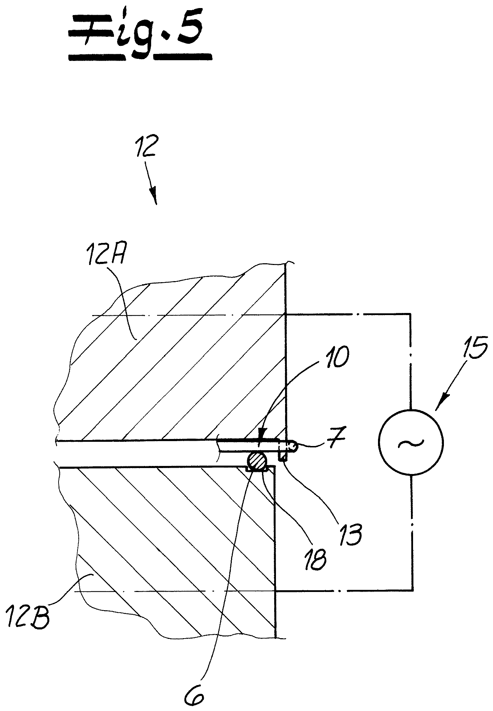

Kommt nun der Heizdraht 7 aufgrund des weiteren Umdrehens der Heizdrahtrolle 12A in Kontakt mit einem der Versorgungsleiter 6 (s. Fig. 5), so fließt ein von einer Spannungsquelle 15 verursachter Strom über die Rollen 12A, 12B sowie über den jeweiligen Versorgungsleiter 6 und den Heizdraht 7.

Die Spannung ist so gewählt, dass ein ausreichend hoher Strom fließt, der zur Erhitzung des Heizdrahtes und insbesondere der Versorgungsleiter 6 führt. Dabei wird der jeweilige Versorgungsleiter 6 bereichsweise aufgeschmolzen, so dass der Heizdraht 7 und der jeweilige Versorgungsleiter 6 im Bereich der Kontaktpunkte 10 miteinander verlötet werden. Folglich weist das Material der Versorgungsleiter 6 eine geringere Schmelztemperatur als das Material des Heizdrahtes 7 auf. Nach dem Verlöten wird das flächige Element 5 in Form der Gleitfolie mittels einer Folienrolle 16 und einer zweiten Gegenrolle 17 auf dem Heizdraht 7 aufgeklebt. Hierzu ist die Gleitfolie mit einer Klebeschicht versehen.

Unabhängig von der Herstellung des Heizelementes 2 wird in einem weiteren Schritt das Innenrohr 1 extrudiert. Die Schnittanordnung des Heizelementes 2 auf dem Innenrohr 1 geschieht mittels bloßem Umwickeln, so dass das Heizelement 2 spiralförmig um das Innenrohr 1 gewunden ist. Um das Innenrohr 1 bzw. das Heizelement 2 herum wird die Druckausgleichsschicht 3 extrudiert. Ebenso werden alle nachfolgenden Schichten extrudiert.

## Patentansprüche

1. Leitung für ein flüssiges Medium, insbesondere für eine wässrige Lösung insbesondere in Kraftfahrzeugen, umfassend ein medienverträgliches Innenrohr (1), wenigstens ein Heizelement (2), eine das Heizelement (2) umschließende Druckausgleichsschicht (3) und eine die Druckausgleichsschicht (3) umschließende Festigkeitsschicht (4), wobei die Druckausgleichsschicht (3) nachgiebiger als das Innenrohr (1) und die Festigkeitsschicht (4) ist,
**dadurch gekennzeichnet, dass**
das Heizelement (2) das Innenrohr (1) nur zu einem Teil umschließt und dass die Druckausgleichsschicht (3) einen porösen Kunststoff umfasst.

2. Leitung nach Anspruch 1, wobei die Druckausgleichsschicht (3) elektrisch und/oder thermisch isolierend ist.

3. Leitung nach einem der Ansprüche 1 oder 2, wobei die Stärke der Druckausgleichsschicht (3) größer als die größte radiale Ausdehnung des Heizelementes (2) ist.

4. Leitung nach einem der Ansprüche 1 bis 3, wobei das Innenrohr (1) eine Schichtdicke von 0,2 bis 2,0 mm, vorzugsweise von 0,3 bis 1,5 mm und besonders vorzugsweise von 0,5 bis 0,8 mm aufweist.

5. Leitung nach einem der Ansprüche 1 bis 4, wobei die Schichtdicke der Festigkeitsschicht (4) 0,4 bis 5 mm, vorzugsweise 0,7 bis 3,0 mm und besonders vorzugsweise 1,0 bis 2,0 mm beträgt.

6. Leitung nach einem der Ansprüche 1 bis 5, wobei der an der Festigkeitsschicht (4) gemessene Außendurchmesser 5 bis 15 mm, vorzugsweise 7 bis 12 mm und besonders vorzugsweise 8 bis 11 mm beträgt.

7. Leitung nach einem der Ansprüche 1 bis 6, wobei das Heizelement (2) an dem Innenrohr (1) anliegt.

8. Leitung nach einem der Ansprüche 1 bis 7, wobei das Heizelement (2) gleitend auf dem Innenrohr (1) gelagert ist.

9. Leitung nach einem der Ansprüche 1 bis 8, wobei das Heizelement (2) eine Vielzahl von Heizwiderständen in Parallelschaltung umfasst.

10. Leitung nach einem der Ansprüche 1 bis 9, wobei das Heizelement (2) wenigstens einen alternierenden Heizdraht (7) aufweist.

11. Leitung nach einem der Ansprüche 1 bis 10, wobei die Festigkeitsschicht (4) von einer Isolationsschicht (8) umschlossen wird und die Isolationsschicht (8) vorzugsweise von einer äußeren Schutzschicht (9) umgeben ist.

12. Verfahren zur Herstellung einer Leitung, insbesondere einer Leitung gemäß einem der Ansprüche 1 bis 11, wobei ein medienverträgliches Innenrohr (1) bereitgestellt wird, wobei ein Heizelement (2) derart an der Leitung angeordnet wird, dass das Heizelement (2) das Innenrohr (1) nur zu einem Teil umschließt, wobei eine Druckausgleichsschicht (3) um das Innenrohr (1) bzw. das Heizelement (2) herum angeordnet wird, wobei die Druckausgleichsschicht (3) einen porösen Kunststoff umfasst, wobei eine Festigkeitsschicht (4) um die Druckausgleichsschicht (3) herum angeordnet wird.

13. Verfahren nach Anspruch 12, wobei das Heizelement (2) wenigstens zwei Versorgungsleiter (6) und wenigsten einen Heizdraht (7) aufweist, wobei eine Anordnungsvorrichtung (12) den Heizdraht (7) zu den Versorgungsleitern (6) positioniert und den Heizdraht (7) mit den Versorgungsleitern (6) stoffschlüssig verbindet.

## Claims

1. A line for a liquid medium, in particular for an aqueous solution, in particular in motor vehicles, consisting of a media-compatible inner pipe (1), at least one heating element (2), a pressure compensation layer (3) and a strength layer (4) enveloping the pressure compensation layer (3), wherein the pressure compensation layer (3) is more flexible than the inner pipe (1) and strength layer (4),
**characterized in that**
the heating element (2) only partially envelops the inner pipe (1), and that the pressure compensation layer (3) encompasses a porous plastic.

2. The line according to claim 1, wherein the pressure compensation layer (3) is electrically and/or thermally insulating.

3. The line according to one of claims 1 or 2, wherein the thickness of the pressure compensation layer (3) is greater than the largest radial expansion of the heating element (2).

4. The line according to one of claims 1 to 3, wherein the inner pipe (1) has a layer thickness of 0.2 to 2.0 mm, preferably of 0.3 to 1.5 mm, and especially preferably of 0.5 to 0.8 mm.

5. The line according to one of claims 1 to 4, wherein the layer thickness of the strength layer (4) measures 0.4 to 5 mm, preferably 0.7 to 3.0 mm, and especially preferably 1.0 to 2.0 mm.

6. The line according to one of claims 1 to 5, wherein the outer diameter measured on the strength layer (4) equals 5 to 15 mm, preferably 7 to 12 mm, and especially preferably 8 to 11 mm.

7. The line according to one of claims 1 or 6, wherein the heating element (2) abuts against the inner pipe (1).

8. The line according to one of claims 1 to 7, wherein the heating element (2) is slideably mounted on the inner pipe (1).

9. The line according to one of claims 1 to 8, wherein the heating element (2) has a plurality of heating resistors connected in parallel.

10. The line according to one of claims 1 to 9, wherein the heating element (2) has at least one alternating heating wire (7).

11. The line according to one of claims 1 to 10, wherein the strength layer (4) is enclosed by an insulation layer (8), and the insulation layer (8) is preferably enveloped by an outer protective layer (9).

12. A method for manufacturing a line, in particular a line according to one of claims 1 to 11, wherein a media-compatible inner pipe (1) is provided, wherein a heating element (2) is arranged on the line in such a way that the heating element (2) only partially envelops the inner pipe (1), wherein a pressure compensation layer (3) is arranged around the inner pipe (1) or heating element (2), wherein the pressure compensation layer (3) encompasses a porous plastic, wherein a strength layer (4) is arranged around the pressure compensation layer (3).

13. The method according to claim 12, wherein the heating element (2) has at least two supply conductors (6) and at least one heating wire (7), wherein a placement apparatus (12) positions the heating wire (7) relative to the supply conductors (6), and integrally connects the heating wire (7) with the supply conductors (6).

## Revendications

1. Conduite pour un milieu liquide, notamment pour une solution aqueuse en particulier dans des véhicules automobiles, comprenant un tuyau intérieur compatible avec le milieu (1), au moins un élément chauffant (2), une couche de compensation de pression (3) entourant l'élément chauffant (2) et une couche de résistance (4) enfermant la couche de compensation de pression (3), la couche de compensation de pression (3) étant plus flexible que le tuyau intérieur (1) et la couche de résistance (4),
**caractérisé en ce que**
l'élément chauffant (2) entoure le tuyau intérieur (1) seulement sur une partie et **en ce que** la couche de compensation de pression (3) comprend une matière plastique poreuse.

2. Conduite selon la revendication 1, la couche de compensation de pression (3) étant électriquement et/ou thermiquement isolante.

3. Conduite selon l'une quelconque des revendications 1 ou 2, l'épaisseur de la couche de compensation de pression (3) étant plus grande que l'extension radiale maximale de l'élément chauffant (2).

4. Conduite selon l'une quelconque des revendications 1 à 3, le tuyau intérieur (1) comportant une épaisseur de couche de 0,2 à 2,0 mm, de préférence de 0,3 à 1,5 mm et notamment de préférence de 0,5 à 0,8 mm.

5. Conduite selon l'une quelconque des revendications 1 à 4, l'épaisseur de couche de la couche de résistance (4) étant de 0,4 à 5 mm, de préférence de 0,7 à 3,0 mm et notamment de préférence de 1,0 à 2,0 mm.

6. Conduite selon l'une quelconque des revendications 1 à 5, le diamètre extérieur mesuré sur la couche de résistance (4) étant de 5 à 15 mm, de préférence de 7 à 12 mm et notamment de préférence de 8 à 11 mm.

7. Conduite selon l'une quelconque des revendications 1 à 6, l'élément chauffant (2) étant appliqué au tuyau intérieur (1).

8. Conduite selon l'une quelconque des revendications 1 à 7, l'élément chauffant (2) étant logé coulissant sur le tuyau intérieur (1).

9. Conduite selon l'une quelconque des revendications 1 à 8, l'élément chauffant (2) comprenant une pluralité de résistances chauffantes en montage parallèle.

10. Conduite selon l'une quelconque des revendications 1 à 9, l'élément chauffant (2) comportant au moins un fil chauffant (7) alternant.

11. Conduite selon l'une quelconque des revendications 1 à 10, la couche de résistance (4) étant enfermée par une couche d'isolation (8) et la couche d'isolation (8) étant entourée de préférence par une couche de protection extérieure (9).

12. Procédé de fabrication d'une conduite, notamment d'une conduite selon l'une quelconque des revendications 1 à 11, un tuyau intérieur (1) compatible avec le milieu étant mis en oeuvre, un élément chauffant (2) étant disposé sur la conduite de telle manière que l'élément chauffant (2) enferme le tuyau intérieur (1) seulement sur une partie, une couche de compensation de pression (3) étant disposée autour du tuyau intérieur (1) ou de l'élément chauffant (2), la couche de compensation de pression (3) comprenant une matière plastique poreuse, une couche de résistance (4) étant disposée autour de la couche de compensation de pression (3).

13. Procédé selon la revendication 12, l'élément chauffant (2) comportant au moins deux conducteurs d'alimentation (6) et au moins un fil chauffant (7), un dispositif de montage (12) positionnant le fil chauffant (7) par rapport aux conducteurs d'alimentation (6) et reliant par conformité de matière le fil chauffant (7) aux conducteurs d'alimentation (6).
